# EUROPEAN PATENT SPECIFICATION

(11) **EP 3 946 835 B1**
(45) Date of publication and mention of the grant of the patent: **04.11.2026**
(21) Application number: 20724412.0
(22) Date of filing: 01.04.2020
(51) Int. Cl.: B25J 9/16

(54) **EXTENDABLE SAFETY SYSTEM FOR ROBOT SYSTEM**
ERWEITERBARES SICHERHEITSSYSTEM FÜR EIN ROBOTERSYSTEM
SYSTÈME DE SÉCURITÉ EXTENSIBLE POUR SYSTÈME DE ROBOT

(30) Priority: 02.04.2019 DK PA201900407; 23.12.2019 DK PA201901542
(43) Date of publication of application: 09.02.2022
(73) Proprietor: Universal Robots A/S, 5260 Odense S (DK)
(72) Inventor: BECK, Anders Billesø, 7000 Fredericia (DK); BRANDT, David, 5863 Ferritslev Fyn (DK); ORMHØJ, Jakob Schultz, 5210 Odense NV (DK)
(74) Representative: Patentgruppen A/S
(86) International application number: PCT/DK2020/050085
(87) International publication number: WO 2020/200386

(56) References cited:
- WO-A1-2017/005272
- CN-U- 208 673 079
- SE-A1- 1 500 299
- US-A1- 2014 214 201
- US-A1- 2017 225 331
- KEVIN BEHNISCH: "White Paper Safe collaboration with ABB robots Electronic Position Switch and SafeMove", 1 October 2008 (2008-10-01), pages 1 - 45, XP055619502, Retrieved from the Internet <URL:https://library.e.abb.com/public/46e5494b3e5f9da6c12574e1003eb5be/6904%20ROP%20White%20Paper%20SafeMove.pdf> [retrieved on 20190906]
- EVINA ALEGUE ELA MVOLO: "Human-Robot Collaboration with High-Payload Robots in Industrial Settings", IECON 2018 - 44TH ANNUAL CONFERENCE OF THE IEEE INDUSTRIAL ELECTRONICS SOCIETY, IEEE, 21 October 2018 (2018-10-21), pages 6035 - 6039, XP033483817, DOI: 10.1109/IECON.2018.8591069

## Description

The present invention relates to a robot system and a method of monitoring a robot system.

### BACKGROUND OF THE INVENTION

Robot arms comprising a plurality of robot joints and robot links where actuators can rotate or translate part of the robot arm in relation to each other are known in the field of robotics. The robot arm can comprise rotational joints where an actuator is configured to rotate a part of the robot arm, and/or prismatic joints where an actuator is configured to translate one part of the robot arm. Typically, the robot arm comprises a robot base which serves as a mounting base for the robot arm; and a robot tool flange where to various tools can be attached, and where a number of robot joints and robot links connects the robot base and the robot tool flange. A robot controller is configured to control the robot joints in order to move the robot tool flange in relation to the base. For instance, in order to instruct the robot arm to carry out a number of working instructions.

Typically, the robot controller is configured to control the robot joints based on a dynamic model of the robot arm, where the dynamic model defines a relationship between the forces acting on the robot arm and the resulting accelerations of the robot arm. Often, the dynamic model comprises a kinematic model of the robot arm, knowledge about inertia of the robot arm and other parameters influencing the movements of the robot arm. The kinematic model defines a relationship between the different parts of the robot arm, and may comprise information of the robot arm such as, length, size of the joints and links and can for instance be described by Denavit-Hartenberg parameters or like. The dynamic model makes it possible for the controller to determine which torques the joint motors shall provide in order to move the robot joints for instance at specified velocity, acceleration or in order to hold the robot arm in a static posture.

In the art examples exists on safety systems for the operation of robot arms. In US2017/0225331 is disclosed to ensure safe robot operation be combining safety-related components with safety-design mechanism of the robot arm to control power levels to limit force and speed of robotic actuators. The safety system may receive input in form of allowed force/speed from a user interface from which maximum allowable power levels to robot joints are derived. The safety controller may monitor operation of the robot and stop the robot if the power levels are exceeded.

In a White Paper Safe collaboration with ABB robots Electronic Position Switch and SafeMove, by Kevin Behnisch a SafeMove function is disclosed as a safety controller of the robot system that is able to stop the robot to prevent hazards situations. The paper defines eight different features, a user is able to configure for the safety controller to monitor is described.

Typically, it is possible to attach various end effectors to the robot tool flange, such as grippers, vacuum grippers, magnetic grippers, screwing machines, welding equipment, dispensing systems, visual systems, force/torque sensors, which can be used together with the robot arm in order to perform various tasks. The robot arm needs to be programmed by a user or a robot integrator which defines various instructions for the robot arm, such as predefined moving patterns and working instructions such as gripping, waiting, releasing, inspection, screwing instructions. A software extension to the robot control software may be provided in order to be able to program an end effector mounted to the robot arm and the end effector provider may provide such software extension together with the end effector. For instance, the robot arm may be configured to carry out the method for extending end user programming of an industrial robot with third party contributions as disclosed in WO 2017/005272.

Additionally, the instruction can be based on various sensors or input signals which typically provide a triggering signal used to stop or start a given instruction. The triggering signals can be provided by various indicators, such as safety curtains, vision systems, position indicators, etc.

Robot arms are increasingly being used along and near humans and to increase the variety of work processes where robots can help humans an increased focus on safety, price and flexibility of the robots is demanded. The robot arms are thus provided with a safety system which monitors the operation of the robot arm and is configured to bring the robot arm into a safe stop upon hazardous situations where humans potentially can get hurt. The safety system is provided on different hardware than the robot controller and is configured to monitor various sensor signals related to the robot arm and to carry out a number of basic safety functions (for instance as described in WO 2015/131904) of the robot arm upon which the safety system brings the robot into a safe state if an unsafe state if registered. The known safety systems monitor the operation of the robot arm independently of eventual end effectors consequently the safety system can not bring the robot arm into a safe state if for instance an end effector is in an unsafe state. Additionally, the safety functions are provided by the robot arm manufacture which limits the safety functions to those provided by the robot arm manufactures.

### SUMMARY OF THE INVENTION

The object of the present invention is to address the above described limitations with the prior art or other problems of the prior art. This is achieved by the robot and method according to the independent claims.

This makes it possible to set up user-defined safety functions which can be executed by a non-safety rated system like a robot controller and where a safety rated safety system can be configured to monitor the outcome of the user-defined safety functions and bring the robot arm to a safe state in case the user-defined safety parameter does not comply with the user-defined safety parameter range. As a result, it is possible to extend the safety functions of a robot system without need for modifying the safety rated safety system, and consequently the safety rated safety system does not need to be re-certified. Additionally, this makes it possible for third party providers to provide their own safety functions, for instance user-defined safety functions associated with external components such as end effectors or other safety components. For instance, the user-defined safety functions may be provided as safety rated user-defined safety functions executed at a non-safety rated robot controller, however due to the monitoring of the user-defined safety parameters by the safety rated safety system the overall safety rating of the robot system can be improved. The dependent claims describe possible embodiments of the robot and methods according to the present invention. The advantages and benefits of the present invention are described in the detailed description of the invention.

### BRIEF DESCRIPTION OF THE DRAWINGS

Fig. 1 illustrates a robot system according to the present invention;
fig. 2 illustrates a simplified structural diagram of a robot system according to the present invention;
fig. 3 illustrates a simplified structural diagram of another embodiment of a robot system according to the present invention;
fig. 4 illustrates a flow diagram of the method of monitoring a robot system according to the present invention; and
fig. 5 illustrates the robot system of fig. 2 with a safety signal path.

### DETAILED DESCRIPTION OF THE INVENTION

The present invention is described in view of exemplary embodiments only intended to illustrate the principles of the present invention. The skilled person will be able to provide several embodiments within the scope of the claims. Throughout the description, the reference numbers of similar elements providing similar effects have the same last two digits. Further it is to be understood that in the case that an embodiment comprises a plurality of the same features then only some of the features may be labeled by a reference number.

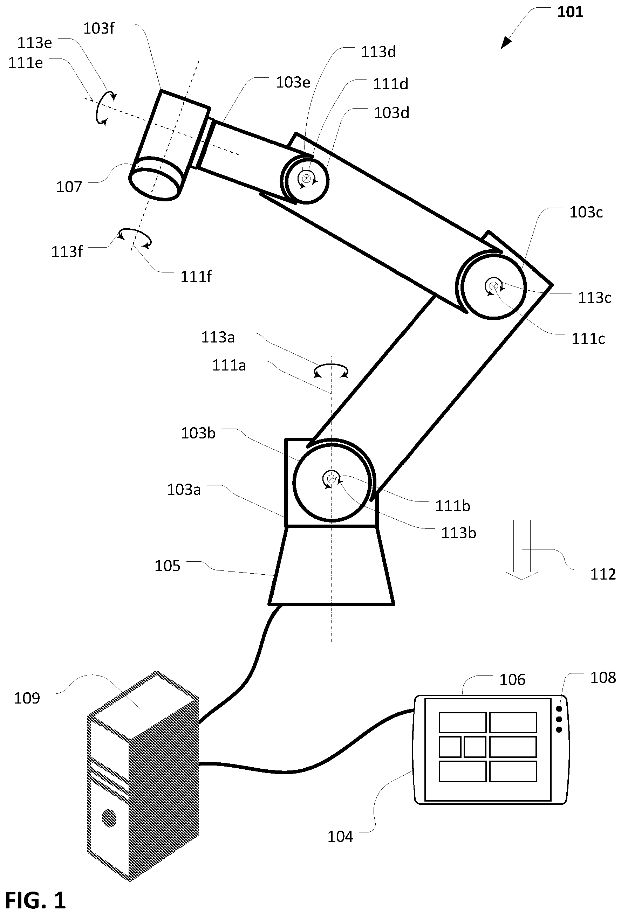

Fig. 1 illustrates a robot arm 101 comprising a plurality of robot joints 103a, 103b, 103c, 103d, 103e, 103f connecting a robot base 105 and a robot tool flange 107. A base joint 103a is configured to rotate the robot arm around a base axis 111a (illustrated by a dashed dotted line) as illustrated by rotation arrow 113a; a shoulder joint 103b is configured to rotate the robot arm around a shoulder axis 111b (illustrated as a cross indicating the axis) as illustrated by rotation arrow 113b; an elbow joint 103c is configured to rotate the robot arm around an elbow axis 111c (illustrated as a cross indicating the axis) as illustrated by rotation arrow 113c, a first wrist joint 103d is configured to rotate the robot arm around a first wrist axis 111d (illustrated as a cross indicating the axis) as illustrated by rotation arrow 113d and a second wrist joint 103e is configured to rotate the robot arm around a second wrist axis 111e (illustrated by a dashed dotted line) as illustrated by rotation arrow 113e. Robot joint 103f is a tool joint comprising the robot tool flange 107, which is rotatable around a tool axis 111f (illustrated by a dashed dotted line) as illustrated by rotation arrow 113f. The illustrated robot arm is thus a six-axis robot arm with six degrees of freedom, however it is noticed that the present invention can be provided in robot arms comprising fewer or more robot joints, further it is to be understood that the robot joint also may comprise prismatic joints or a combination of both rotational joints and prismatic joints.

In the illustrated embodiment the joints comprise an output flange rotatable in relation to a robot joint body and the output flange is connected to a neighbor robot joint either directly or via an arm section as known in the art. The robot joint comprises a joint motor configured to rotate the output flange, for instance via a gearing or directly connected to the motor shaft. In embodiments with prismatic joints the output flange is translational in relation to the robot joint body and a joint motor configured to translate the robot output flange in relation to the robot joint body. Additionally, the robot joint comprises at least one joint sensor providing a sensor signal indicative of at least one of the following parameters: an angular position of the output flange, an angular position of the motor shaft of the joint motor, a motor current of the joint motor or an external force trying to rotate the output flange or motor shaft. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint. It is noted that both output encoders indicating the angular position of the output flange and input encoders indicating the angular position of the motor shaft can be provided, which in embodiments where a gearing have been provided makes it possible to determine a relationship between the input and output side of the gearing. The joint sensor can also be provided as a current sensor indicating the current through the joint motor and thus be used to obtain the torque provided by the motor. For instance, in connection with a multiphase motor, a plurality of current sensors can be provided in order to obtain the current through each of the phases of the multiphase motor.

The robot arm comprises at least one robot controller arrange in a robot control box 109 and is configured to control the robot joints by controlling the motor torque provided to the joint motors based on a dynamic model of the robot arm, the direction of gravity acting 112 and the joint sensor signal. The robot controller can be provided as a computer comprising in interface device 104 enabling a user to communicate with the robot, for instance to control and program the robot arm. The controller can be provided as an external device for instance arranged in a robot control box 109 as illustrated in fig. 1, as a device integrated into the robot arm or as a combination thereof. The interface device can for instance be provided as a teach pendent as known from the field of industrial robots which can communicate with the robot controller via wired or wireless communication protocols. The interface device can for instanced comprise a display 106 and a number of input devices 108 such as buttons, sliders, touchpads, joysticks, track balls, gesture recognition devices, keyboards etc. The display may be provided as a touch screen acting both as display and input device.

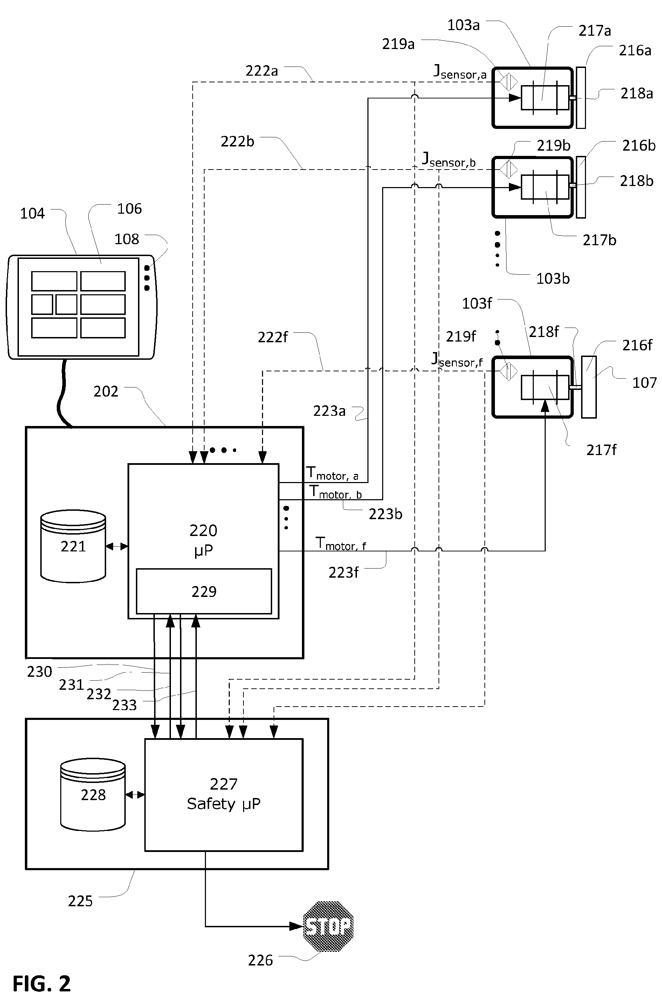

Fig. 2 illustrates a simplified structural diagram of the robot arm illustrated in fig. 1. The robot joints 103a, 103b and 103f have been illustrated in structural form and the robot joints 103c, 103d, 103e have been omitted for the sake of simplicity of the drawing. Further the robot joints are illustrated as separate elements however it is to be understood that they are interconnected as illustrated in fig. 1. The robot joints comprise an output flange 216a,216b,216f and a joint motor 217a, 217b, 217f, where the output flange 216a,216b,216f is rotatable in relation to the robot joint body and the joint motor 217a, 217b, 217f is configured to rotate the output flange via an output axle 218a, 218b, 218f. In this embodiment the output flange 216f of the tool joint 103f comprises the tool flange 107. At least one joint sensor 219a, 219b, 219f providing a sensor signal 222a, 222b, 222f indicative of at least one joint sensor parameter J_{sensor,a}, J_{sensor,b}, J_{sensor,f} of the respective joint. The joint sensor parameter is at least indicative of at least one of a pose parameter indicating the position and orientation of the output flange in relation to the robot joints for instance: an angular position of the output flange, an angular position of a shaft of the joint motor, a motor current of the joint motor. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint body.

The robot controller 202 comprises a processer 220 and memory 221 and is configured to control the joint motors of the robot joints by providing motor control signals 223a, 223b, 223f to the joint motors. The motor control signals 223a, 223b, 223f are indicative of the motor torque T_{motor,a}, T_{motor, b}, and T_{motor,f} that each joint motor shall provide to the output flanges, and the robot controller is configured to determine the motor torque based on a dynamic model of the robot arm as known in the prior art. The dynamic model makes it possible for the controller to calculate which torque the joint motors shall provide to each of the joint motors to make the robot arm perform a desired movement. The dynamic model of the robot arm can be stored in the memory 221 and be adjusted based on the joint sensor parameters J_{sensor,a}, J_{sensor,b} , J_{sensor,f} For instance, the joint motors can be provided as multiphase electromotors and the robot controller can be configured to adjust to motor torque provided by the joint motors by regulating the current through the phases of the multiphase motors as known in the art of motor regulation.

The robot system comprises a safety system 225 monitoring the robot arm and comprises a safety processer 227 and safety memory 228. The safety system is configured to bring the robot arm into a safe state 226 based on at least one basic safety function evaluated by the safety system. The safe state is illustrated by a STOP sign indicating that one safe mode can be a mode where the robot arm is brought into a standstill, for instance by activating a brake system configured to brake the moving parts of the robot arm, by turning off power to the robot arm, etc. However, it is to be understood that the safe mode can be any mode of operation where the robot arm is considered safe in relation to a human, for instance the robot may be instructed to move at a reduced speed, to provide an indication signal (visible, audial, haptic etc. or combinations thereof) warning a human that an error has occurred. A basic safety function is a safety function provided to the safety controller and which is programmed and stored on the safety memory and which can not be edited or modified by an end-user. Typically, the basic safety functions are coded by the provider of the robot safety system. In some embodiments the user may at initiation of the robot system provide and modify the safety limits of which the basic safety functions applies.

The robot controller 202 and the safety system 225 are provided on different hardware for instance in form of different computer mother boards, microcontrollers, processors, computer servers and/or integrated circuits.

The robot controller is configured to provide at least one user-defined safety parameter range; where the user-defined safety parameter range defines a value or parameter that needs to be fulfilled during operation of the robot arm. The user-defined safety parameter range can for instance be defined by:
- a value interval within which a user-defined safety parameter must be in, for the robot arm to be in a safe mode of operation;
- a threshold value that must not be exceeded by a user-defined safety parameter;
- a check sum that needs to be fulfilled for the robot arm to be in safe mode of operation;
- a time interval, within or without, which a user-defined safety parameter must be provided in order for the robot arm to be in safe mode.
The user-defined safety parameter range can for instance be provided by a user-defined safety software code configured 229 to be executed by the robot controller processor, where the user-defined safety software code can be installed on the robot controller software. The robot controller is configured to provide the user-defined safety parameter range to the safety system via a user-defined safety parameter range signal 230. In one embodiment the safety system can optionally be configured to provide a confirmation signal 231 confirming receipt and configuration of the user-defined safety parameter range by the safety system. The user-defined safety parameter range serves to configure the safety system by informing the safety system about the nature of the parameter that need to be monitored by the safety system and the safety system can provide a confirmation to the robot controller that it has be properly configured and is ready to receive and monitor the user-defined safety parameter.

The robot controller is configured to provide at least one user-defined safety parameter; where the user-defined safety parameter is provided based on a user-defined safety function. The user-defined safety function can be any function capable of providing a value indicating a safety state of the robot arm or an external device co-operating with the robot arm, for instance a value or parameter indicating if the robot arm is operating in a safe mode. The user-defined safety parameter can for instance be a value provided based on a number of sensor values indicating various properties of the robot arm or the environment, an end effector and/or any other external device connected to the robot system. The user-defined safety parameter can also be provided as trigger/pulse signal indicating the operational state of the robot arm. The user-defined safety parameter range can for instance be provided by a user-defined safety software code configured 229 to be executed by the robot controller processor, where the user-defined safety software code can be installed on the robot controller software. The robot controller is configured to provide the user-defined safety parameter to the safety system via a user-defined safety parameter signal 232. In one embodiment the safety system can optionally be configured to provide a confirmation signal 233 confirming receipt and configuration of the user-defined safety parameter by the safety system.

The safety system comprises a safety range monitoring safety function configured to monitor the robot controller by evaluating if the at least one user-defined safety parameter is within the user-defined safety range. This can be achieved via a number of logic tests comparing the user-defined safety parameter with the user-defined safety parameter range. If the user-defined safety parameter is outside the user-defined safety parameter range, then the safety system will bring the robot arm into a safe mode as described in paragraph [0015].

For instance, in an embodiment the user-defined safety parameter range can define an interval of values wherein the user-defined safety parameter must be in order for the robot arm to be in a safe mode and the logic test can test if the user-defined safety parameter is within the interval of values and provide an indication of whether or not the robot is operating in safe mode. The safety system can then bring the robot arm to a safe state if the logic test indicate that the robot arm is not operating in safe mode.

In another embodiment the user-defined safety parameter range can define a time interval within or without which the user-defined safety parameter must be sent to the safety system in order for the robot arm to be in a safe mode and the logic test can test if the user-defined safety parameter have been received within the defined time interval and provide an indication of whether or not the robot is operating in safe mode. The safety system can then bring the robot arm to a safe state if the logic test indicate that the robot arm is not operating in safe mode.

In another embodiment the user-defined safety parameter range can define checksum that needs to be fulfilled by the user-defined safety parameter in order for the robot arm to be in a safe mode and the logic test can test if the user-defined safety parameter fulfills the checksum and provide an indication of whether or not the robot arm is operating in safe mode. The safety system can then bring the robot arm to a safe state if the logic test indicate that the robot arm is not operating in safe mode.

In one embodiment the safety system is configured to provide a confirmation to the robot controller, where the confirmation indicates that the safety system has received the user-defined safety parameter range. This makes it possible to provide a control function as a part of the robot controller which ensures that the user-defined safety parameter range have been properly configured by the safety system. For instance, the robot controller can provide an indication to a user that the user-defined safety function is not functioning correctly.

In one embodiment the safety system is configured to monitoring receipt of the user-defined safety parameter and bringing the robot arm into a safe mode in case the user-defined safety parameter has not been received. This makes it possible to ensure that the safety system brings the robot arm into safe mode of operation in case the user-defined safety parameter have not been provided by the robot controller, which provides further safety.

In one embodiment the robot controller is configured to receive at least one sensor signal indicating at least one of:
- a state of at least a part of the robot arm;
- a state of at least one external device;
and the robot controller is configured to generate the at least one user-defined safety parameter based on the sensor signal. This makes it possible to provide user-defined safety functions to the robot arm based on sensor signals, for instance based on the build-in sensors of the robot arm or one or more extra sensors provided to the robot arm. This makes it possible to provide a large number of user-defined safety functions to the robot system and which can be based on a large variety of sensor signals. For instance, providers of external safety devices can provide user-defined safety functions which then can be installed on the robot controller and be monitored by the safety system of the robot system.

In one embodiment the robot system comprises a user interface enabling a user to communicate with the robot system and the user interface comprises an user interface for specifying at least one of the user-defined safety functions and/or the user-defined safety parameter. The user interface can for instance be provided as a graphical user interface where the user can enter and program the user-defined safety functions, define the user-defined safety parameter range.

In one embodiment the user interface for specifying at least one of the user-defined safety functions and the user-defined safety parameter range comprises means for providing user-defined safety software code to the robot controller and means for installing the user-defined safety software code at the robot controller, wherein the user-defined safety software code comprises instructions instructing the robot controller to:
- specify the at least one user-defined safety parameter range;
- provide the user-defined safety parameter range to the safety system;
- generate the at least one user-defined safety parameter based on the at least one user-defined safety function;
- provide the user-defined safety parameter to the safety system.
This makes it possible to provide the user-defined safety function via software which can be provided on a memory device comprising the software code and the user can then install the user-defined software code.

For instance, the user-defined safety software code may be provided as part of a process control software or basic control software for the robot arm. Basic control software should be understood as software which is used by the robot controller to control movement of the robot arm i.e. of the individual joints and thereby of the robot flange and any robot tool attached thereto. The basic control software is typically developed based on a mathematical model of the robot arm and is delivered together with the robot arm. So that the user of the robot arm can move the robot arm without any particular programming skills. Process control software should be understood as software provided to the robot system from an external source such as a data processing unit, server, computer or tablet on which such process control software is stored or developed. The process control software can also be programmed directly on the robot system for instance by using a user interface device. Process control software can be simple coordinates in a three-dimensional Cartesian coordinate system defining waypoints for movement of the robot arm, program code defining the operation of a robot tool attached to the robot flange, advanced math for determine points in the Cartesian coordinate system, optimize precision e.g. in movements, sensors systems, etc. Hence, the robot controller controls the movement of the robot arm and tool based on a combination of process and basic control software, where the process control software provides at least one user-defined safety function defining a user-defined safety parameter and/or a user-defined safety parameter range.

In one embodiment the robot controller is provided as a non-safety rated robot control system, meaning that the robot controller does not fulfill the safety standard relating to robot systems. This has the advantage that the robot controller software can be provided as a partial open system where users can install user-defined software components.

In one embodiment the safety system is provided as a safety rated robot safety system meaning that the safety system fulfills the safety standards in relation to robot systems and thus can be used to monitor the robot system in a safe and reliable way.

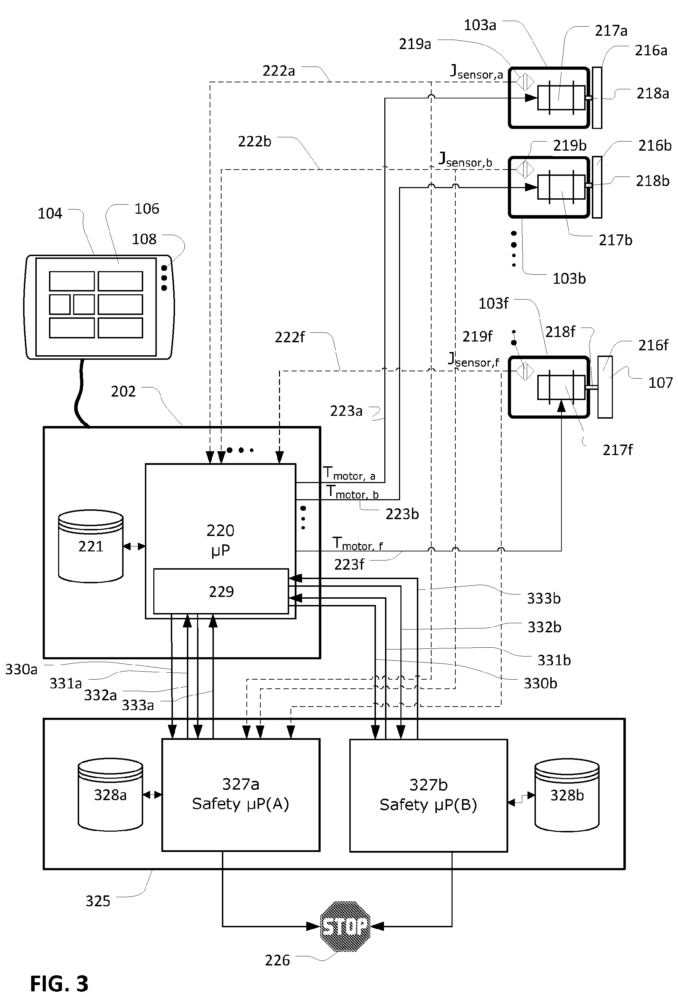

Fig. 3 illustrates another embodiment of the robot system according to the present invention. The robot system is like the robot system illustrated in fig. 2 and similar elements and features have been given the same reference numbers as in fig. 2 and will not be describe further. In this embodiment the safety system 325 comprises two independent safety controllers comprising a safety processor and a safety memory.

The first safety controller comprises a first safety processor 327a and a first safety memory 328a which communicates and monitors the robot controller based on a first user-defined safety range signal 330a, a first confirmation signal 331a confirming receipt of the user-defined safety parameter range, a first user-defined safety parameter signal 332a and a first confirmation signal 333a confirming receipt of the user-defined safety parameter.

The second safety controller comprises a second safety processor 327b and a second safety memory 328b which communicates and monitors the robot controller based on a second user-defined safety range signal 330b, a second confirmation signal 331b confirming receipt of the user-defined safety parameter range, a second user-defined safety parameter signal 332b and a second confirmation signal 333b confirming receipt of the user-defined safety parameter.

The safety controller(s) is in an exemplary embodiment certified safety controller(s) meaning, that the safety level hereof is higher than the safety level of the robot controller 220. Reference to safety level may refer to average probability of failure of the hardware i.e. of the controllers. Hence, a high level safety controller has a lower average probability of failure than a robot controller. High level safety system which may include both hardware and software may be categorized according to SIL (SIL; Safety Integrity Levels) level 1-4 where 4 is highest.

Both the first safety controller and the second safety controller monitor the robot controller as described in fig. 2 and is provided in different hardware. This ensures a redundant monitoring of the robot controller by independent safety controllers. The two independent safety controllers may for instance be provided by two independent teams ensuring different implementation of the safety functions of the safety system. Additionally, the two safety controllers may be configured to monitor each other in order to ensure that both safety controllers are running properly; if this is not the case with one of the safety controllers then the other safety controller will bring the robot arm into a safe state.

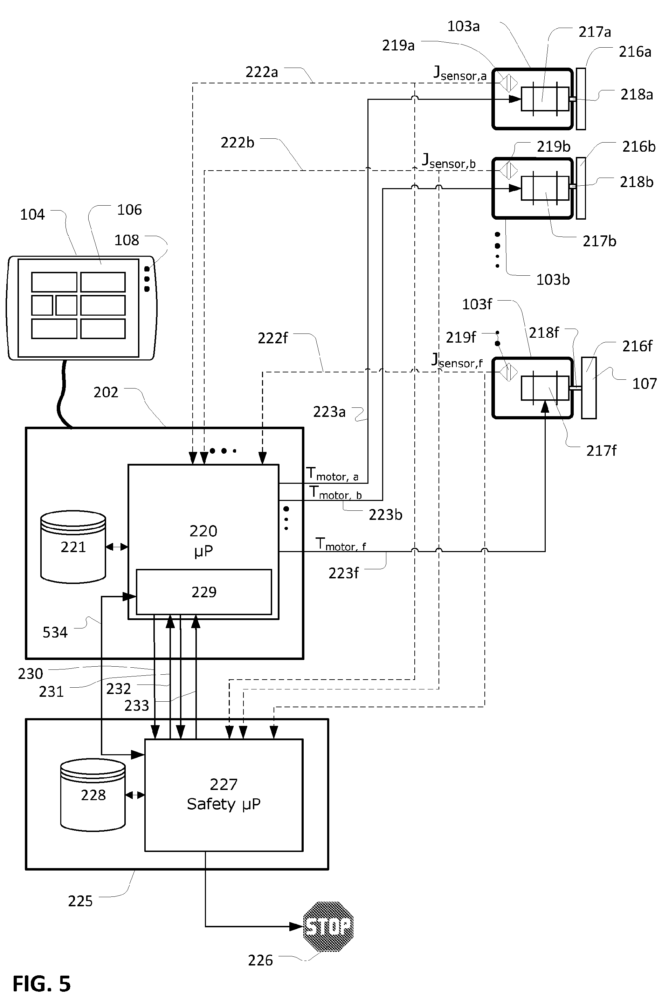

Fig. 5 illustrates another embodiment of the robot system according to the present invention. The robot system is like the robot system illustrated in fig. 2 and similar elements and features have been given the same reference numbers as in fig. 2 and will not be describe further. In this embodiment the user-defined safety parameter range may as described above be provided to the robot controller as part of the user-defined safety software code. In addition, the user-defined safety software code may facilitate a further safety feature in the form of a safety signal path 534 between the robot controller 220 and the safety controller 227. The safety signal path can be a wired connection between the controllers, which ensures a physical connection between the robot controller and the safety controllers. In this and other exemplary embodiment described in this document, the user-defined safety software code may be included as part of a process control software or basic control software. Basic control software should be understood as software which is used by the robot controller to control movement of the robot arm i.e. of the individual joints and thereby of the robot flange and any robot tool attached thereto. The basic control software is typically developed based on a mathematical model of the robot arm and is delivered together with the robot arm. So that the user of the robot arm can move the robot arm without any particular programming skills. It should be mentioned, that the basic control software defines default values for the different safety limits. The default values may also be referred to as normal values and can only be changed within a predefined range if the robot arm is powered off. Process control software should be understood as software provided to the robot system from an external source such as a data processing unit, server, computer or tablet on which such process control software is stored or developed. The process control software can also be programmed directly on the robot system for instance by using a user interface device. Process control software can be simple coordinates in a three-dimensional Cartesian coordinate system defining waypoints for movement of the robot arm, program code defining the operation of a robot tool attached to the robot flange, advanced math for determine points in the Cartesian coordinate system, optimize precision e.g. in movements, sensors systems, etc. Hence, the robot controller controls the movement of the robot arm and tool based on a combination of process and basic control software, where the process control software provides process at least one user-defined safety function defining a user-defined safety parameter and/or a user-defined safety parameter range. In an exemplary embodiment, the process values are referred to as user-defined safety parameter range that can be adjusted run-time i.e. the robot arm does not have to be powered off while modifying the user-defined safety parameter range.

At least one of the robot controllers and/or the safety controllers is configured as a sending controller and at least another one of the robot controllers and/or the safety controllers is configured as a receiving controller. The sending controller is configured for sending a safety signal via the safety signal path to one or more receiving controllers.

The safety signal path may be used and implemented as part of the process or basic control software with the purpose of facilitating communication of a safety signal between the robot controller and the safety controllers (or safety controller if only one is present). The safety signal is in its simplest form a signal sent from the robot controller to each of the safety controllers, which if not received within a predetermined time from departure, will cause the safety controller to bring the robot arm in a stop mode. It should be mentioned that the signal could also be send from the safety controllers to the robot controller with the same purpose and result.

In one embodiment the sending controller is the robot controller and the one or more receiving controllers are at least one of the safety controllers. This ensure that the safety controller(s) can monitor the robot controller and bring the robot arm into a safe mode in case that a safety signal has not been received through the safety signal path as this can indicate malfunction of the robot controller.

In an exemplary embodiment, the safety signal is sent and therefore expected to be receive in a predetermined pattern or as a predetermined value. The predetermined pattern may be established as a sequence of signals separated by predetermined time periods. If not receive as expected, the receiving controller will bring the robot arm in stop mode. It should be mentioned, that an unexpected receipt of the safety signal may also include a too early receipt i.e. the expected receipt of the safety signal may be within a range specified by two endpoints. The lower endpoint may be measure in milliseconds such as 10ms and the upper may be measured seconds such as 5 seconds or even in minutes.

The receiving controller may determine which stop mode the robot arm should be brought into. Examples are safeguard stop where the robot arm only stops but maintains powered on and violation stop where the robot arm is also powered off. The latter requires reset of controller to start up again which is not the case for the former.

The safety signal provides additional safety to the robot control system in that failure in either hardware or software can be detected, and the robot arm subsequently can be brought in a stop / safe mode.

It is noted that the user-defined safety software code facilitating a further safety feature in the form of a safety signal path between the robot controller 220 and the safety controller as illustrated in fig. 5 and described in paragraphs [0036]-[0042] also can be provided to an embodiment where the safety system comprises two safety controllers, for instance like the embodiment illustrated in fig. 3 and described in paragraphs [0031]-[0035]. In such embodiment a first safety signal path can be established between the robot controller 220 and the first safety processor 327a and second safety signal path can be established between the robot controller 220 and the second safety processor 327b.

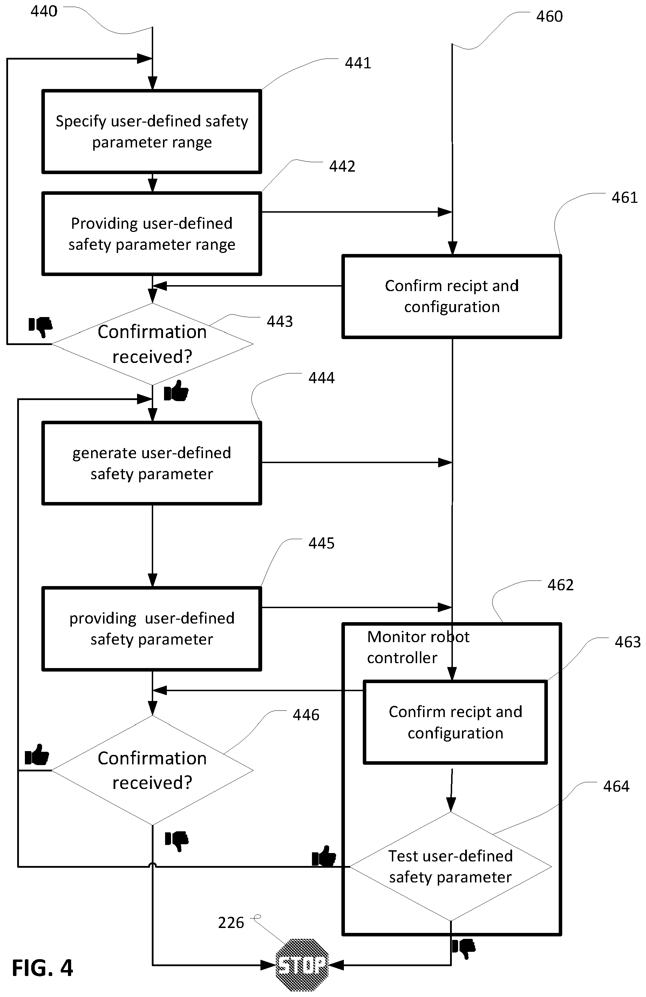

Fig. 4 illustrates a flow diagram of a method of monitoring a robot system according to the present invention. The robot system may be provided as the robot system describe previously and the flow diagram illustrates the flow 440 of the robot controller at the left-hand side and the flow 460 of the safety system at the right-hand side.

The method comprises a step 441 of specifying a user-defined safety parameter range and a step 442 of providing the user-defined safety parameter range to the safety system. The safety system then configures a safety range monitoring safety function and sends in step 461 a confirmation to the robot controller. The robot controller evaluates whether or not the confirmation has been received from the safety system. In case the confirmation has been received indicated by thumb-up icon the robot controller continues the flow. In case the confirmation has not been received as indicated by thumb-down icon the robot controller restarts the flow or alternatively abandons the method. This ensures that the safety range monitoring safety function of the robot controller is properly configured.

The method comprises a step 444 of specifying a user-defined safety parameter and a step 445 of providing the user-defined safety parameter to the safety system. Step 444 and 445 can be performed by a user-defined safety function executed by the robot controller. The safety system then in step 462 initiates a safety range monitoring safety function and sends in step 463 a confirmation to the robot controller that the user-defined safety parameter has been received. The safety range monitoring safety function evaluates if the user-defined safety parameter is within the user-defined safety parameter range. If the evaluation is positive (indicated by a thumb-up icon) meaning that the robot arm is operating in safe mode then the operation of the robot arm can continue, and the robot controller is restarting step 444 of generating a new user-defined safety parameter. If the evaluation is negative (indicated by a thumb-down icon) meaning that the robot arm operating in un-safe mode then the operation of the robot arm is brought into a safe state of operation 226.

Additionally, the robot controller evaluates 446 whether the confirmation of the received user-defined safety parameter from the safety system have been received. In case the confirmation has been received indicated by thumb-up icon the robot controller restarts the flow. In case the confirmation has not been received as indicated by thumb-down icon the robot controller brings the robot arm into a safe mode of operation 226. This ensures that the robot arm is brought into a safe state in case the communication of the user-defined safety parameter fails or in case the safety system fails.

**BRIEF DESCRIPTION OF FIGUR REFERENCES**

| | |
|---|---|
| 101 | Robot system |
| 202 | Robot controller |
| 103a-103f | Robot joint |
| 104 | Interface device |
| 105 | Robot base |
| 106 | Display |
| 107 | Robot tool flange |
| 108 | Input devices |
| 109 | Robot control box |
| 111a-111f | Axis of robot joints |
| 112 | Direction of gravity |
| 113a-113f | Rotation arrow of robot joints |
| 314 | Output side of robot tool joint |
| 216a; 216b; 216f | Output flange |
| 217a; 217b; 217f | Joint motors |
| 218a; 218b, 218f | Output axle |
| 219a; 219b; 219f | Joint sensor |
| 220 | Processor |
| 221 | Memory |
| 222a; 222b; 222f | Joint sensor signal |
| 223a, 223b, 223f | Motor control signals |
| 225, 325 | Safety system |
| 226 | Safe mode |
| 227, 327a, 327b | Safety processor |
| 228, 328a, 328b | Safety memory |
| 229 | User-defined safety software code |
| 230, 330a, 330b | User-defined safety parameter range signal |
| 231, 331a, 331b | Confirmation signal confirming receipt of user-defined safety parameter range |
| 232, 332a, 332b | User-defined safety parameter signal |
| 233, 333a, 333b | Confirmation signal confirming receipt of user-defined safety parameter |
| 534 | Safety signal path |
| 440 | Flow of robot controller |
| 441 | Step of specifying user-defined safety parameter range |
| 442 | Step of providing user-defined safety parameter range |
| 443 | Evaluating confirmation of safe system |
| 444 | Step of generating user-defined safety parameter |
| 445 | Step of providing user-defined safety parameter range |
| 446 | Evaluating safety system's receipt of user-defined safety parameter |
| 460 | Flow of safety system |
| 461 | Step of confirming receipt and configuration |
| 462 | Step of monitoring robot controller |
| 463 | Step of confirmation receipts of user-defined safety parameter |
| 464 | Test of user-defined safety parameter |

## Claims

1. A robot system comprising:
• a robot arm (101) comprising a plurality of robot joints (103a-103f) connecting a robot base (105) and a robot tool flange (107);
• a robot controller (202) configured to control said robot arm;
• a safety system (225, 325) monitoring said robot arm, said safety system is configured to bring said robot arm into a safe mode based on at least one basic safety function evaluated by said safety system, wherein said safety system is provided as a safety rated robot safety system;
wherein said robot controller and said safety system is provided on different hardware, **characterized in that** said robot controller is configured to:
• specify at least one user-defined safety parameter range, and
• provide said user-defined safety parameter range to said safety system;
wherein said robot controller is furthermore configured to:
• generate at least one user-defined safety parameter based on execution of at least one user-defined safety function, and
• provide said user-defined safety parameter to said safety system;
and said safety system comprises a safety range monitoring function configured to monitor said robot controller by:
• evaluating if said at least one user-defined safety parameter is within said user-defined safety parameter range; and
• bringing said robot arm into a safe mode in case said user-defined safety parameter is outside said user-defined safety parameter range.

2. The robot system according to claim 1 **characterized in that** said safety range monitoring function is configured to provide a confirmation to said robot controller, where said confirmation indicates that said safety system have received said user-defined safety parameter range.

3. The robot system according to any one of claims 1-2 **characterized in that** said safety range monitoring function is configured to monitoring receipt of said user-defined safety parameter and bringing said robot arm into a safe mode in case said user-defined safety parameter has not been received.

4. The robot system according to any one of claims 1-3 **characterized in that** said safety system comprises at least two independent safety controllers provided on different hardware, where each independent safety controller comprises said safety range monitoring function.

5. The robot system according to any one of claims 1-4 **characterized in that** said robot controller is configured to receive at least one sensor signal indicating at least one of:
• a state of at least a part of the robot arm;
• a state of at least one external device;
where said at least one user-defined safety function is configured to generate said at least one user-defined safety parameter based on said at least one sensor signal.

6. The robot system according to any one of claims 1-5 **characterized in that** said robot system comprises an user interface enabling a user to communicate with said robot system, wherein said user interface comprises user interface means for specifying at least one of said user-defined safety functions and said at least one user-defined safety parameter.

7. The robot system according to claim 6 **characterized in that** said user interface for specifying at least one of said user-defined safety functions and said at least one user-defined safety parameter comprises means for providing user-defined safety software code to said robot controller and means for installing said user-defined safety software code at said robot controller.

8. The robot system according to claim 7 **characterized in that** said user-defined safety software code comprises instructions instructing said robot controller to:
• specify said at least one user-defined safety parameter range;
• provide said user-defined safety parameter range to said safety system;
• generate said at least one user-defined safety parameter based on said at least one user-defined safety function;
• provide said user-defined safety parameter to said safety system.

9. The robot system according to any one of claims 1-8 **characterized in that** a safety signal path is established between said robot controller and one or more safety controllers and wherein a sending controller is configured for sending a safety signal via the safety signal path to one or more receiving controllers,
wherein said sending controller is said robot controller and the one or more receiving controllers are at least one of said safety controllers.

10. The robot system according to claim 9 **characterized in** the that said receiving controller is configured for bringing the robot arm in stop mode if said safety signal is not received as expected.

11. The robot system according to any of the claims 1-10 **characterized in that** said robot controller is provided as a non-safety rated robot control system.

12. A method of monitoring a robot system, where said robot system comprises:
• a robot arm (101) comprising a plurality of robot joints (103a-103f) connecting a robot base (105) and a robot tool flange (107);
• a robot controller (202) configured to control said robot arm;
• a safety system (225, 325) monitoring said robot arm, said safety system is configured to bring said robot arm into a safe mode based on at least one basic safety function evaluated by said safety system, wherein said safety system is provided as a safety rated robot safety system;
wherein said robot controller and said safety system is provided on different hardware, **characterized in that** said method comprises the steps of:
• specifying (441) at least one user-defined safety parameter range;
• providing by said robot controller (442) said user-defined safety parameter range to said safety system;
• generating (444) at least one user-defined safety parameter based on execution of at least one user-defined safety function using said robot controller, and
• providing (445) said user-defined safety parameter to said safety system;
wherein said method further comprises the steps of, by said safety system:
• monitoring (462) said robot system by using a safety range monitoring function provided at said safety system, said step of monitoring said robot system comprises the steps of:
∘ evaluating (464) if said at least one user-defined safety parameter is within said user-defined safety range; and
∘ bringing said robot arm into a safe mode (226) in case said user-defined safety parameter is outside said user-defined safety range.

13. The method according to claim 12 **characterized in that** said step of monitoring said robot system comprises a step of providing (461) a confirmation to said robot controller, where said confirmation indicates that said safety system have received said user-defined safety parameter range.

14. The method according to any one of claims 12-13 further comprising a step of receiving at least one sensor signal indicating at least one of:
• a state of at least a part of the robot arm, and
• a state of at least one external device;
wherein said step of generating at least one user-defined safety parameter based on said at least one user-defined safety function is based on said sensor signal.

15. The method according to any one of claims 12-14 further comprising a step of specifying at least one of said user-defined safety functions and said user-defined safety parameters.

16. The method according to claim 15 **characterized in that** said step of specifying said at least one user-defined safety functions and said user-defined safety parameter comprises a step of installing user-defined safety software code to said robot controller wherein said user-defined safety software code comprises instructions instructing said robot controller to:
• specify said at least one user-defined safety parameter range;
• provide said user-defined safety parameter range to said safety system;
• generate said at least one user-defined safety parameter based on said at least one user-defined safety function; and
• provide said user-defined safety parameter to said safety system.

## Patentansprüche

1. Robotersystem, umfassend:
• einen Roboterarm (101), umfassend eine Vielzahl von Robotergelenken (103a-103f), die eine Roboterbasis (105) und einen Roboterwerkzeugflansch (107) verbinden;
• eine Robotersteuerung (202), die konfiguriert ist, um den Roboterarm zu steuern;
• ein Sicherheitssystem (225, 325), das den Roboterarm überwacht, wobei das Sicherheitssystem konfiguriert ist, um den Roboterarm basierend auf mindestens einer grundlegenden Sicherheitsfunktion, die durch das Sicherheitssystem evaluiert wird, in einen sicheren Modus zu bringen, wobei das Sicherheitssystem als ein sicherheitsbewertetes Robotersicherheitssystem bereitgestellt ist;
wobei die Robotersteuerung und das Sicherheitssystem auf unterschiedlicher Hardware bereitgestellt sind, **dadurch gekennzeichnet, dass** die Robotersteuerung konfiguriert ist zum:
• Spezifizieren mindestens eines benutzerdefinierten Sicherheitsparameterbereichs, und
• Bereitstellen des benutzerdefinierten Sicherheitsparameterbereichs an das Sicherheitssystem;
wobei die Robotersteuerung des Weiteren konfiguriert ist zum:
• Erzeugen mindestens eines benutzerdefinierten Sicherheitsparameters basierend auf einer Ausführung mindestens einer benutzerdefinierten Sicherheitsfunktion, und
• Bereitstellen des benutzerdefinierten Sicherheitsparameters an das Sicherheitssystem;
und wobei das Sicherheitssystem eine Sicherheitsbereichsüberwachungsfunktion umfasst, die konfiguriert ist, um die Robotersteuerung zu überwachen durch:
• Evaluieren, ob der mindestens eine benutzerdefinierte Sicherheitsparameter innerhalb des benutzerdefinierten Sicherheitsparameterbereichs liegt; und
• Bringen des Roboterarms in einen sicheren Modus, falls der benutzerdefinierte Sicherheitsparameter außerhalb des benutzerdefinierten Sicherheitsparameterbereichs liegt.

2. Robotersystem nach Anspruch 1, **dadurch gekennzeichnet, dass** die Sicherheitsbereichsüberwachungsfunktion konfiguriert ist, um eine Bestätigung an die Robotersteuerung bereitzustellen, wobei die Bestätigung anzeigt, dass das Sicherheitssystem den benutzerdefinierten Sicherheitsparameterbereich empfangen hat.

3. Robotersystem nach einem der Ansprüche 1 bis 2, **dadurch gekennzeichnet, dass** die Sicherheitsbereichsüberwachungsfunktion konfiguriert ist, um einen Empfang des benutzerdefinierten Sicherheitsparameters zu überwachen und den Roboterarm in einen sicheren Modus zu bringen, falls der benutzerdefinierte Sicherheitsparameter nicht empfangen wurde.

4. Robotersystem nach einem der Ansprüche 1 bis 3, **dadurch gekennzeichnet, dass** das Sicherheitssystem mindestens zwei unabhängige Sicherheitssteuerungen umfasst, die auf unterschiedlicher Hardware bereitgestellt sind, wobei jede unabhängige Sicherheitssteuerung die Sicherheitsbereichsüberwachungsfunktion umfasst.

5. Robotersystem nach einem der Ansprüche 1 bis 4, **dadurch gekennzeichnet, dass** die Robotersteuerung konfiguriert ist, um mindestens ein Sensorsignal zu empfangen, das mindestens eines anzeigt von:
• einem Zustand mindestens eines Teils des Roboterarms;
• einem Zustand mindestens einer externen Vorrichtung;
wobei die mindestens eine benutzerdefinierte Sicherheitsfunktion konfiguriert ist, um den mindestens einen benutzerdefinierten Sicherheitsparameter basierend auf dem mindestens einen Sensorsignal zu erzeugen.

6. Robotersystem nach einem der Ansprüche 1 bis 5, **dadurch gekennzeichnet, dass** das Robotersystem eine Benutzerschnittstelle umfasst, die es einem Benutzer ermöglicht, mit dem Robotersystem zu kommunizieren, wobei die Benutzerschnittstelle Benutzerschnittstellenmittel zum Spezifizieren mindestens einer der benutzerdefinierten Sicherheitsfunktionen und des mindestens einen benutzerdefinierten Sicherheitsparameters umfasst.

7. Robotersystem nach Anspruch 6, **dadurch gekennzeichnet, dass** die Benutzerschnittstelle zum Spezifizieren mindestens einer der benutzerdefinierten Sicherheitsfunktionen und des mindestens einen benutzerdefinierten Sicherheitsparameters Mittel zum Bereitstellen eines benutzerdefinierten Sicherheitssoftwarecodes an die Robotersteuerung und Mittel zum Installieren des benutzerdefinierten Sicherheitssoftwarecodes auf der Robotersteuerung umfasst.

8. Robotersystem nach Anspruch 7, **dadurch gekennzeichnet, dass** der benutzerdefinierte Sicherheitssoftwarecode Anweisungen umfasst, die die Robotersteuerung anweisen zum:
• Spezifizieren des mindestens einen benutzerdefinierten Sicherheitsparameterbereichs;
• Bereitstellen des benutzerdefinierten Sicherheitsparameterbereichs an das Sicherheitssystem;
• Erzeugen des mindestens einen benutzerdefinierten Sicherheitsparameters basierend auf der mindestens einen benutzerdefinierten Sicherheitsfunktion;
• Bereitstellen des benutzerdefinierten Sicherheitsparameters an das Sicherheitssystem.

9. Robotersystem nach einem der Ansprüche 1 bis 8, **dadurch gekennzeichnet, dass** ein Sicherheitssignalpfad zwischen der Robotersteuerung und einer oder mehreren Sicherheitssteuerungen eingerichtet ist, und wobei eine Sendesteuerung zum Senden eines Sicherheitssignals über den Sicherheitssignalpfad an eine oder mehrere Empfangssteuerungen konfiguriert ist,
wobei die Sendesteuerung die Robotersteuerung ist und die eine oder die mehreren Empfangssteuerungen mindestens eine der Sicherheitssteuerungen sind.

10. Robotersystem nach Anspruch 9, **dadurch gekennzeichnet, dass** die Empfangssteuerung zum Bringen des Roboterarms in einen Stoppmodus konfiguriert ist, wenn das Sicherheitssignal nicht wie erwartet empfangen wird.

11. Robotersystem nach einem der Ansprüche 1 bis 10, **dadurch gekennzeichnet, dass** die Robotersteuerung als ein nicht sicherheitsbewertetes Robotersteuersystem bereitgestellt ist.

12. Verfahren zum Überwachen eines Robotersystems, wobei das Robotersystem umfasst:
• einen Roboterarm (101), umfassend eine Vielzahl von Robotergelenken (103a-103f), die eine Roboterbasis (105) und einen Roboterwerkzeugflansch (107) verbinden;
• eine Robotersteuerung (202), die konfiguriert ist, um den Roboterarm zu steuern;
• ein Sicherheitssystem (225, 325), das den Roboterarm überwacht, wobei das Sicherheitssystem konfiguriert ist, um den Roboterarm basierend auf mindestens einer grundlegenden Sicherheitsfunktion, die durch das Sicherheitssystem evaluiert wird, in einen sicheren Modus zu bringen, wobei das Sicherheitssystem als ein sicherheitsbewertetes Robotersicherheitssystem bereitgestellt ist;
wobei die Robotersteuerung und das Sicherheitssystem auf unterschiedlicher Hardware bereitgestellt sind, **dadurch gekennzeichnet, dass** das Verfahren die Schritte umfasst:
• Spezifizieren (441) mindestens eines benutzerdefinierten Sicherheitsparameterbereichs;
• Bereitstellen, durch die Robotersteuerung (442), des benutzerdefinierten Sicherheitsparameterbereichs an das Sicherheitssystem;
• Erzeugen (444) mindestens eines benutzerdefinierten Sicherheitsparameters basierend auf der Ausführung mindestens einer benutzerdefinierten Sicherheitsfunktion unter Verwendung der Robotersteuerung, und
• Bereitstellen (445) des benutzerdefinierten Sicherheitsparameters an das Sicherheitssystem;
wobei das Verfahren ferner die Schritte umfasst, durch das Sicherheitssystem:
• Überwachen (462) des Robotersystems durch Verwenden einer Sicherheitsbereichsüberwachungsfunktion, die auf dem Sicherheitssystem bereitgestellt ist, wobei der Schritt des Überwachens des Robotersystems die Schritte umfasst:
∘ Evaluieren (464), ob der mindestens eine benutzerdefinierte Sicherheitsparameter innerhalb des benutzerdefinierten Sicherheitsbereichs liegt; und
∘ Bringen des Roboterarms in einen sicheren Modus (226), falls der benutzerdefinierte Sicherheitsparameter außerhalb des benutzerdefinierten Sicherheitsbereichs liegt.

13. Verfahren nach Anspruch 12, **dadurch gekennzeichnet, dass** der Schritt des Überwachens des Robotersystems einen Schritt des Bereitstellens (461) einer Bestätigung an die Robotersteuerung umfasst, wobei die Bestätigung anzeigt, dass das Sicherheitssystem den benutzerdefinierten Sicherheitsparameterbereich empfangen hat.

14. Verfahren nach einem der Ansprüche 12 bis 13, ferner umfassend einen Schritt des Empfangens mindestens eines Sensorsignals, das mindestens eines anzeigt von:
• einem Zustand mindestens eines Teils des Roboterarms, und
• einem Zustand mindestens einer externen Vorrichtung;
wobei der Schritt des Erzeugens mindestens eines benutzerdefinierten Sicherheitsparameters basierend auf der mindestens einen benutzerdefinierten Sicherheitsfunktion auf dem Sensorsignal basiert.

15. Verfahren nach einem der Ansprüche 12 bis 14, ferner umfassend einen Schritt des Spezifizierens mindestens eines der benutzerdefinierten Sicherheitsfunktionen und der benutzerdefinierten Sicherheitsparameter.

16. Verfahren nach Anspruch 15, **dadurch gekennzeichnet, dass** der Schritt des Spezifizierens der mindestens einen benutzerdefinierten Sicherheitsfunktion und des benutzerdefinierten Sicherheitsparameters einen Schritt des Installierens des benutzerdefinierten Sicherheitssoftwarecodes in die Robotersteuerung umfasst, wobei der benutzerdefinierte Sicherheitssoftwarecode Anweisungen umfasst, die die Robotersteuerung anweisen zum:
• Spezifizieren des mindestens einen benutzerdefinierten Sicherheitsparameterbereichs;
• Bereitstellen des benutzerdefinierten Sicherheitsparameterbereichs an das Sicherheitssystem;
• Erzeugen des mindestens einen benutzerdefinierten Sicherheitsparameters basierend auf der mindestens einen benutzerdefinierten Sicherheitsfunktion; und
• Bereitstellen des benutzerdefinierten Sicherheitsparameters an das Sicherheitssystem.

## Revendications

1. Système robotique comprenant :
• un bras robotique (101) comprenant une pluralité d'articulations de robot (103a-103f) reliant une base de robot (105) et une collerette d'outil de robot (107) ;
• un dispositif de commande de robot (202) configuré pour commander ledit bras robotique ;
• un système de sécurité (225, 325) surveillant ledit bras robotique, ledit système de sécurité est configuré pour amener ledit bras robotique dans un mode sûr en fonction d'au moins une fonction de sécurité basique évaluée par ledit système de sécurité, dans lequel ledit système de sécurité est fourni en tant que système de sécurité robotique certifié ;
dans lequel ledit dispositif de commande de robot et ledit système de sécurité sont fournis sur un matériel différent, **caractérisé en ce que** ledit dispositif de commande de robot est configuré pour :
• spécifier au moins une plage de paramètres de sécurité définie par l'utilisateur, et
• fournir ladite plage de paramètres de sécurité définie par l'utilisateur audit système de sécurité ;
dans lequel ledit dispositif de commande de robot est en outre configuré pour :
• générer au moins un paramètre de sécurité défini par l'utilisateur en fonction de l'exécution d'au moins une fonction de sécurité définie par l'utilisateur, et
• fournir ledit paramètre de sécurité défini par l'utilisateur audit système de sécurité ;
et ledit système de sécurité comprend une fonction de surveillance de plage de sécurité configurée pour surveiller ledit dispositif de commande de robot en :
• évaluant si ledit au moins un paramètre de sécurité défini par l'utilisateur se situe dans ladite plage de paramètres de sécurité définie par l'utilisateur ; et
• amenant ledit bras robotique dans un mode sûr au cas où ledit paramètre de sécurité défini par l'utilisateur se situe en dehors de ladite plage de paramètres de sécurité définie par l'utilisateur.

2. Système robotique selon la revendication 1, **caractérisé en ce que** ladite fonction de surveillance de plage de sécurité est configurée pour fournir une confirmation audit dispositif de commande de robot, où ladite confirmation indique que ledit système de sécurité a reçu ladite plage de paramètres de sécurité définie par l'utilisateur.

3. Système robotique selon l'une quelconque des revendications 1 à 2,
**caractérisé en ce que** ladite fonction de surveillance de plage de sécurité est configurée pour la surveillance de la réception dudit paramètre de sécurité défini par l'utilisateur et le passage dudit bras robotique sur un mode sûr dans le cas où ledit paramètre de sécurité défini par l'utilisateur n'a pas été reçu.

4. Système robotique selon l'une quelconque des revendications 1 à 3,
**caractérisé en ce que** ledit système de sécurité comprend au moins deux dispositifs de commande de sécurité indépendants fournis sur un matériel différent, où chaque dispositif de commande de sécurité indépendant comprend ladite fonction de surveillance de plage de sécurité.

5. Système robotique selon l'une quelconque des revendications 1 à 4,
**caractérisé en ce que** ledit dispositif de commande de robot est configuré pour recevoir au moins un signal de capteur indiquant au moins l'un parmi :
• un état d'au moins une partie du bras robotique ;
• un état d'au moins un dispositif externe ;
où ladite au moins une fonction de sécurité définie par l'utilisateur est configurée pour générer ledit au moins un paramètre de sécurité défini par l'utilisateur en fonction dudit au moins un signal de capteur.

6. Système robotique selon l'une quelconque des revendications 1 à 5,
**caractérisé en ce que** ledit système robotique comprend une interface utilisateur permettant à un utilisateur de communiquer avec ledit système robotique, dans lequel ladite interface utilisateur comprend un moyen d'interface utilisateur permettant de spécifier au moins l'une desdites fonctions de sécurité définies par l'utilisateur et ledit au moins un paramètre de sécurité défini par l'utilisateur.

7. Système robotique selon la revendication 6, **caractérisé en ce que** ladite interface utilisateur permettant de spécifier au moins l'une desdites fonctions de sécurité définies par l'utilisateur et ledit au moins un paramètre de sécurité défini par l'utilisateur comprend un moyen permettant de fournir un code logiciel de sécurité défini par l'utilisateur audit dispositif de commande de robot et un moyen permettant d'installer ledit code logiciel de sécurité défini par l'utilisateur au niveau dudit dispositif de commande de robot.

8. Système robotique selon la revendication 7, **caractérisé en ce que** ledit code logiciel de sécurité défini par l'utilisateur comprend des instructions ordonnant audit dispositif de commande de robot de :
• spécifier ladite au moins une plage de paramètres de sécurité définie par l'utilisateur ;
• fournir ladite plage de paramètres de sécurité définie par l'utilisateur audit système de sécurité ;
• générer ledit au moins un paramètre de sécurité défini par l'utilisateur en fonction de ladite au moins une fonction de sécurité définie par l'utilisateur ;
• fournir ledit paramètre de sécurité défini par l'utilisateur audit système de sécurité.

9. Système robotique selon l'une quelconque des revendications 1 à 8, **caractérisé en ce qu'**un trajet de signal de sécurité est établi entre ledit dispositif de commande de robot et un ou plusieurs dispositifs de commande de sécurité, et dans lequel un dispositif de commande d'envoi est configuré pour l'envoi d'un signal de sécurité par l'intermédiaire du trajet de signal de sécurité à un ou plusieurs dispositifs de commande de réception,
dans lequel ledit dispositif de commande d'envoi est ledit dispositif de commande de robot et l'un ou plusieurs dispositifs de commande de réception sont au moins l'un desdits dispositifs de commande de sécurité.

10. Système robotique selon la revendication 9, **caractérisé en ce que** ledit dispositif de commande de réception est configuré pour le passage du bras robotique en mode arrêt si ledit signal de sécurité n'est pas reçu comme prévu.

11. Système robotique selon l'une quelconque des revendications 1 à 10,
**caractérisé en ce que** ledit dispositif de commande de robot est fourni en tant que système de commande de robot non certifié pour la sécurité.

12. Procédé de surveillance d'un système robotique, où ledit système robotique comprend :
• un bras robotique (101) comprenant une pluralité d'articulations de robot (103a-103f) reliant une base de robot (105) et une collerette d'outil de robot (107) ;
• un dispositif de commande de robot (202) configuré pour commander ledit bras robotique ;
• un système de sécurité (225, 325) surveillant ledit bras robotique, ledit système de sécurité est configuré pour amener ledit bras robotique dans un mode sûr en fonction d'au moins une fonction de sécurité basique évaluée par ledit système de sécurité, dans lequel ledit système de sécurité est fourni en tant que système de sécurité robotique certifié ;
dans lequel ledit dispositif de commande de robot et ledit système de sécurité sont fournis sur un matériel différent, **caractérisé en ce que** ledit procédé comprend les étapes de :
• spécification (441) d'au moins une plage de paramètres de sécurité définie par l'utilisateur ;
• fourniture par ledit dispositif de commande de robot (442) de ladite plage de paramètres de sécurité définie par l'utilisateur audit système de sécurité ;
• génération (444) d'au moins un paramètre de sécurité défini par l'utilisateur en fonction de l'exécution d'au moins une fonction de sécurité définie par l'utilisateur à l'aide dudit dispositif de commande de robot, et
• fourniture (445) dudit de paramètre de sécurité défini par l'utilisateur audit système de sécurité ;
dans lequel ledit procédé comprend en outre les étapes de, par ledit système de sécurité :
• surveillance (462) dudit système robotique en utilisant une fonction de surveillance de plage de sécurité fournie au niveau dudit système de sécurité, ladite étape de surveillance dudit système robotique comprend les étapes de :
∘ évaluation (464) si ledit au moins un paramètre de sécurité défini par l'utilisateur se situe dans ladite plage de sécurité définie par l'utilisateur ; et
∘ au passage dudit bras robotique sur un mode sûr (226) dans le cas où ledit paramètre de sécurité défini par l'utilisateur se situe en dehors de ladite plage de sécurité définie par l'utilisateur.

13. Procédé selon la revendication 12, **caractérisé en ce que** ladite étape de surveillance dudit système robotique comprend une étape consistant à fournir (461) une confirmation audit dispositif de commande de robot, où ladite confirmation indique que ledit système de sécurité a reçu ladite plage de paramètres de sécurité définie par l'utilisateur.

14. Procédé selon l'une quelconque des revendications 12 à 13, comprenant en outre une étape de réception d'au moins un signal de capteur indiquant au moins l'un parmi :
• un état d'au moins une partie du bras robotique ; et
• un état d'au moins un dispositif externe ;
dans lequel ladite étape de génération d'au moins un paramètre de sécurité défini par l'utilisateur en fonction de ladite au moins une fonction de sécurité définie par l'utilisateur est en fonction dudit signal de capteur.

15. Procédé selon l'une quelconque des revendications 12 à 14, comprenant en outre une étape consistant à la spécification d'au moins l'une desdites fonctions de sécurité définies par l'utilisateur et desdits paramètres de sécurité définis par l'utilisateur.

16. Procédé selon la revendication 15, **caractérisé en ce que** ladite étape de spécification de ladite au moins une des fonctions de sécurité définies par l'utilisateur et dudit paramètre de sécurité défini par l'utilisateur comprend une étape consistant à l'installation d'un code logiciel de sécurité défini par l'utilisateur sur ledit dispositif de commande de robot, dans lequel ledit code logiciel de sécurité défini par l'utilisateur comprend des instructions ordonnant audit dispositif de commande de robot de :
• spécifier ladite au moins une plage de paramètres de sécurité définie par l'utilisateur ;
• fournir ladite plage de paramètres de sécurité définie par l'utilisateur audit système de sécurité ;
• générer ledit au moins un paramètre de sécurité défini par l'utilisateur en fonction de ladite au moins une fonction de sécurité définie par l'utilisateur ; et
• fournir ledit paramètre de sécurité défini par l'utilisateur audit système de sécurité.
